# EUROPEAN PATENT APPLICATION

(11) **EP 1 109 105 A1**
(43) Date of publication of application: **20.06.2001**
(21) Application number: 99124950.9
(22) Date of filing: 14.12.1999
(51) Int. Cl.: G06F 17/21

(54) **Inserting a data object into a text document**

(71) Applicant: SUN MICROSYSTEMS, INC., Palo Alto, California 94303 (US)
(72) Inventor: Lange, Thomas, 22041 Hamburg (DE)
(74) Representative: Betten & Resch

(57) **Abstract**

For inserting a data object as for example a mathematical formula or special characters like Greek characters into a text document instruction symbols representing the data object are inputted in the form of text characters into the text document, a text portion containing instruction symbols is selected, and the instruction symbols contained in the selected text portion are converted into the data object represented by the instruction symbols. The invention allows a rapid input of data objects into the text document, in particular simple mathematical formulae or single special characters without entering a formula editor or the like.

## Description

### FIELD OF THE INVENTION

The present invention relates to the problem of inserting a data object like a mathematical formula or special characters like Greek characters into a computer generated document as for example a text document.

### DESCRIPTION OF THE RELATED ART

A document may contain besides text data, tables, diagrams, etc. often mathematical formulae or special characters like Greek characters. Mathematical formulae and special characters are particularly important for documents like scientific articles and the like.

For creating a mathematical formula so called formula editors are known which can be opened from the text document. The formula editor contains a large number of displayed key fields and list boxes representing all sorts of different elements of mathematical formulae like brackets, integrals, fraction bars, matrices, so forth. The user can then create the desired formula using these keys and list boxes. After having completed his or her formula the user returns to the original document and pastes the formula as imported object into the document. If the user recognizes a small error in the formula he or she must again open the formula editor, correct the error and return to the original document.

Using a formula editor it is possible to create nearly every desired mathematical formula; however, the operation is complicated and time consuming in particular for simple formulae like simple fractions or square roots, which may appear frequently in a text document. Moreover editing of the formula always requires entering the formula editor and subsequently returning into the original document.

For inserting special characters like for example the Greek character Σ it is necessary to enter a list box containing the special characters.

It is therefore an object of the present invention to facilitate and speed up inserting or editing a data object like a mathematical formula or special character in a document.

### SUMMARY OF THE INVENTION

To solve the above object the present invention provides a method of inserting a data object into a computer generated document wherein instruction symbols representing the data object are input into the document in the form of text characters, a document portion containing instruction symbols is selected and the instruction symbols contained in the selected document portion are converted into the data object represented by the instruction symbols.

With the present invention it is possible to input the data object, which may be a mathematical formula or a Greek or Japanese character and which can be represented by certain instruction symbols into the document using standard characters, which are also used for creating a text document. The user does not need to leave the document and can input the instructions in the same way as the text character, for example by typing on a keyboard.

If the selected document portion contains characters, which are not part of an instruction these characters remain unchanged during the converting operation. Those unchanged characters may be variables like a, b or x in a mathematical formula.

Preferably, the converted data object is inserted into the document at the position of the selected document portion.

The document portion including the instruction symbols may be inputted by means of speech decoding. In this case the present invention is particularly advantageous since the instruction symbols (in contrast to the mathematical symbols itself) may be expressed orally.

Preferably the inserted data object is formatted depending on a surrounding content, for example a text in the same line.

Preferably the inserted data object is automatically stored with the document.

Still preferably the inserted data object may be reconvertible for editing purposes.

The great advantage and utility of the present invention is that it allows fast and easy generation and editing of a data object like a mathematical formula or special characters. This is in particular useful for simple and short data objects and for data objects, which the user needs frequently and thus easily memorizes the instruction symbols representing these data objects. For inserting the object the user needs not to enter a special tool like a formula editor and then return to the original document. Another advantage of the present invention is that it allows the input of the data objects by speech decoding since the instruction symbols can be expressed orally.

Another implementation of the present invention provides a computer program of inserting, on a computer, a data object into a document, comprising inserting instruction symbols representing the data object in the form of text characters into the document, selecting a document portion containing instruction symbols and converting the instruction symbols contained in the selected document portion into the data object represented by the instruction symbols.

A program code may be embodied in any form of a computer program product. A computer program product comprises a medium configured to store or transport computer readable code, or in which computer readable code may be embedded. Some example of computer program products are CD-ROM discs, ROM cards, floppy discs, magnetic tapes, computer hard drives, servers on a network and signals transmitted over a network representing computer readable program code.

According to a still further embodiment the present invention provides a software tool providing instructions for inserting a data object into a computer generated document by inserting instruction symbols inputted in the form of text characters and representing the data object into the document, converting instruction symbols contained in a selected document portion into the data object represented by the instruction symbols, inserting the converted data object into the document, and providing signals for displaying the document including the converted data object.

According to a still further embodiment the present invention provides a computer generated document including a data object generated by a conversion of instruction symbols inputted in the form of text characters, wherein the data object is reconvertible into the instruction symbols.

The above mentioned and other features, utilities and the advantages of the present invention will be apparent from the following detailed description of preferred embodiments of the invention in connection with the accompanying drawings.

### BRIEF DESCRIPTION OF THE DRAWINGS

Figure 1 is a flow chart illustrating method steps of a preferred embodiment of the present invention.

Figure 2A is an example of a text document containing instruction symbols representing a data object according to the present invention.

Figure 2B is a schematic representation of the text document shown in Figure 2A after conversion of a data object.

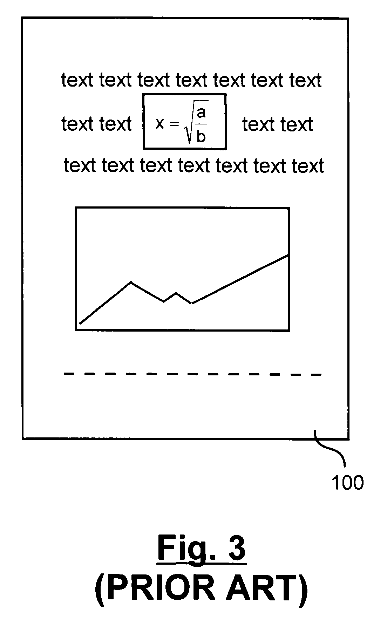

Figure 3 is a schematic representation of a prior art document containing a mathematical formula.

Figure 4 is a schematic illustration of a computer system to which the present invention may be applied.

Figure 5 is a schematic illustration of a client-server configuration to which the present invention may also be applied.

### DETAILED DESCRIPTION OF PREFERRED EMBODIMENTS

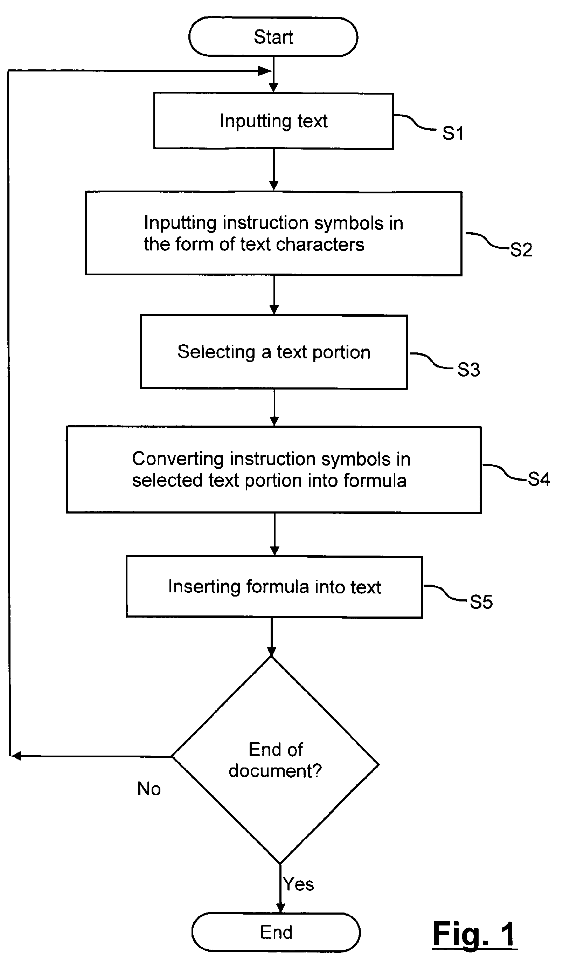

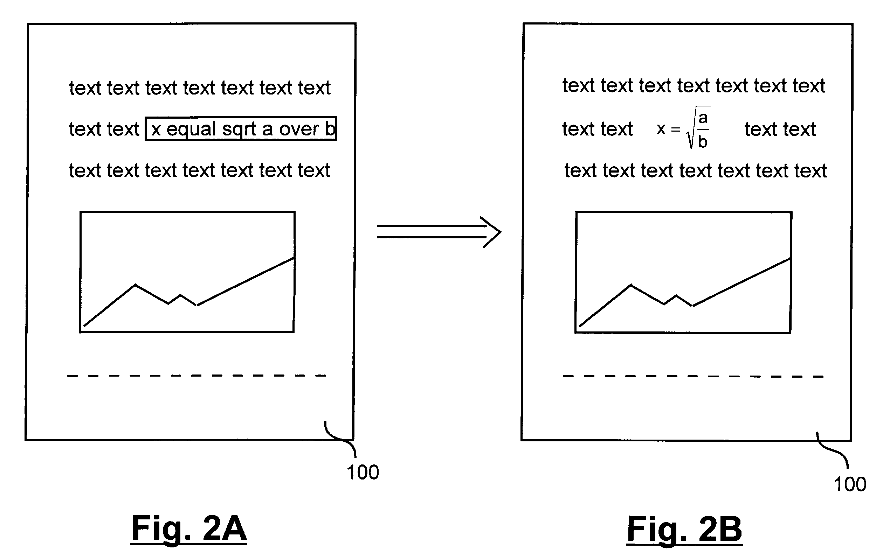

Figure 1 shows in the form of a flow chart the method steps of a preferred embodiment of the present invention. In a method step S1 the user inputs the content of a text document 100, an example of which is shown in Figure 2 and which may, besides text data also contain other data like diagrams, graphics or tables. The text document may, for example, also be an HTML- or XML-document. It should be acknowledged here that the present invention is not restricted to text documents. If the user wishes to input a special data object like a formula into the text document, he or she can enter the formula in the form of instruction symbols representing the data object. The formula $\frac{\text{a}}{\text{b}}$ is represented by "a over b". Here the characters "a" and "b" represent variables and "over" an instruction meaning a fraction bar. Other examples are "sqrt a" for $\sqrt{\text{a}}$, "3 ind 1" for 3₁ and "int (a,b) Omega dt" for 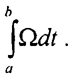 From the last example it is obvious that the present invention is also very useful for inserting special characters like Greek characters into a text document. "pi" may represent the Greek character π, "alpha" may represent α or "lambda" may represent λ. It is also possible to distinguish between small and capital letters, "Lambda" may for example represent Λ. It is immediately apparent that typing the instruction symbols is in many cases much easier and faster than using a special program like a formula editor or a list box for Greek symbols. The same can apply to other special characters like Japanese characters.

Returning to Figure 1, the user inputs the data object, for example the mathematical formula using the instruction symbols in form of standard text characters (step S2). Then, in step S3 the user selects the desired text portion he or she wishes to be converted into a formula. In Figure 2A, for example, the text portion "x equal sqrt a over b" is selected. In the subsequent step S4 the selected text portion is converted into the mathematical formula, which is represented by the string of instruction symbols, in the example of Figure 2, x = $\frac{\text{a}}{\text{b}}$. It is apparent from the example that characters or combinations of characters which do not represent instructions like the variables x, a and b in the example remain unchanged during the conversion step S4. So the creation of a formula containing variables is possible.

Subsequently the converted formula is inserted into the text as is shown in Figure 2B. Preferably the formula is formatted like the surrounding text so that the visual appearance of the text document containing the formula is optimized. If a user wishes to enter further text or formulae the method returns to step S1 or S2. If not the finished document can be saved. Preferably the inserted data object is stored together with the text document.

According to a preferred embodiment of the invention there is an easy possibility to edit a data object like a mathematical formula. The object is entered by e.g. a mouse click and is then reconverted into the text portion containing the instruction symbols. The user can then edit the object like a text, select the edited text portion and convert the same again into a data object. The editing operation can thus be carried out easily without entering a special tool like a formula editor.

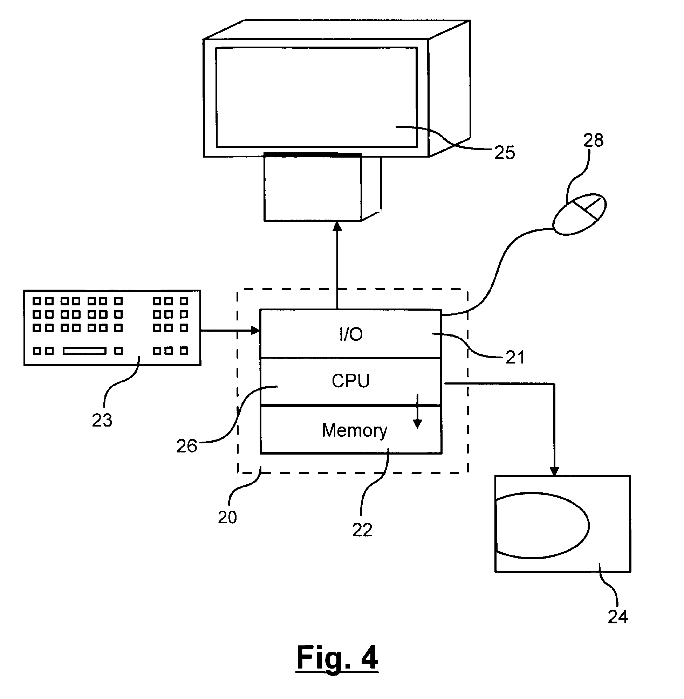

The present invention is applicable to a hardware configuration like a personal computer or work station as illustrated schematically in Figure 4. The computer may comprise a central processing unit CPU 26, an input output I/O unit 21, an internal memory 22 and an external memory 24. The computer further comprises standard input devices like a keyboard 23, a mouse 28 or speech processing means (not illustrated).

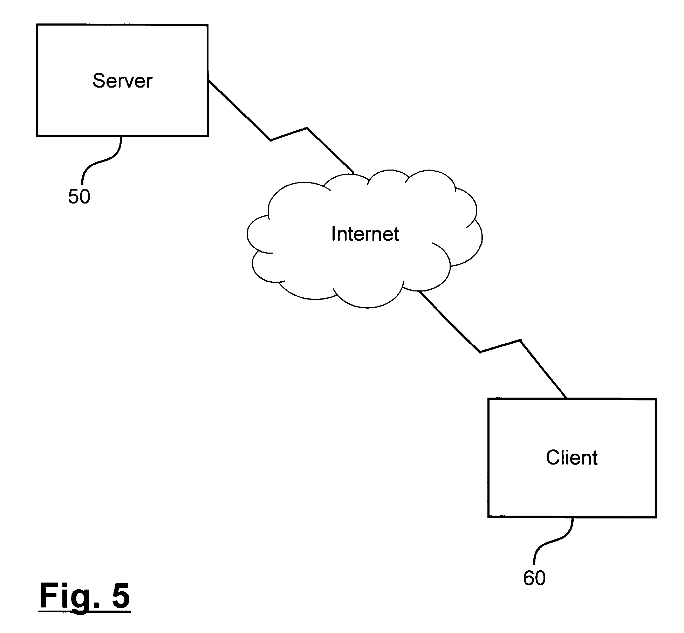

The invention, however, may also be applied to a client-server configuration as illustrated in Figure 5. The document may be displayed on a display screen of a client device 60 while some or all steps of the method as illustrated before in Figures 1 and 2 are carried out on a server computer 50 accessible by the client device 60 over a data network as the internet using a browser application or the like.

While the invention has been particularly shown with reference to a preferred embodiment thereof, it will be understood by those skilled in the art that various other changes in the form and details may be made therein without departing from the spirit and scope of the invention.

## Claims

1. A method of inserting a data object into a computer generated document, comprising the steps of:
inserting instruction symbols representing the data object in the form of text characters into the document,
converting instruction symbols contained in a selected document portion into the data object represented by the instruction symbols.

2. The method of claim 1, wherein the data object comprises a mathematical formula.

3. The method of claim 1, wherein the data object comprises special characters like Greek or Japanese characters.

4. The method of claim 1, wherein text characters in the selected text portion which do not form an instruction symbol remain unchanged during the converting step.

5. The method of claim 1, comprising inserting the converted data object into the document at the position of the selected document portion.

6. The method of claim 1, comprising formatting the inserted data object depending on the content surrounding the inserted data object.

7. The method of claim 1, comprising inputting the instruction symbols by means of speech decoding.

8. The method of claim 1, comprising storing the converted data object automatically with the document.

9. The method of claim 1, wherein the data object is reconvertible into a text portion containing the instruction symbols representing the data object.

10. A computer program for inserting a data object into a computer readable document, comprising program code for carrying out the steps of:
inserting instruction symbols representing the data object in the form of text characters into the document,
converting instruction symbols contained in a selected document into the data object represented by the instruction symbols.

11. The computer program of claim 10, wherein the data object comprises a mathematical formula.

12. The computer program of claim 10, wherein the data object comprises special characters like Greek or Japanese characters.

13. The computer program of claim 10, wherein text characters in the selected document portion which do not form an instruction symbol remain unchanged during the conversion.

14. The computer program of claim 10, wherein the converted data object is inserted into the document at the position of the selected document portion.

15. The computer program of claim 10, wherein the inserted data object is formatted depending on the content surrounding the inserted data object.

16. The computer program of claim 10, wherein the text is inputted by means of speech decoding.

17. The computer program of claim 10, wherein the converted data object is automatically stored with the document.

18. The computer program of claim 10, wherein the data object is reconvertible into a text portion containing the instruction symbols representing the data object.

19. A computer program product for inserting a data object into a computer generated document, the computer program comprising program code for carrying out the steps of:
inserting instruction symbols representing the data object in the form of text characters into the document,
converting instruction symbols contained in a selected document portion into the data object represented by the instruction symbols.

20. The computer program product of claim 19, wherein the data object comprises a mathematical formula.

21. The computer program product of claim 19, wherein the data object comprises special characters like Greek or Japanese characters.

22. The computer program product of claim 19, wherein text characters in the selected document portion which do not form an instruction symbol remain unchanged during the converting step.

23. The computer program product of claim 19, wherein the converted data object is inserted into the document at the position of the selected document portion.

24. The computer program product of claim 19, wherein the inserted data object is formatted depending on the content surrounding the inserted data object.

25. The computer program product of claim 19, wherein the text is inputted by means of speech decoding.

26. The computer program product of claim 19, wherein the converted data object is automatically stored with the document.

27. The computer program product of claim 19, wherein the data object is reconvertible into a text portion containing the instruction symbols representing the data object.

28. A software tool providing instructions for inserting a data object into a computer generated document by:
inserting instruction symbols inputted in the form of text characters and representing the data object into the document,
converting instruction symbols contained in a selected document portion into the data object represented by the instruction symbols,
inserting the converted data object into the document, and providing signals for displaying the document including the converted data object.

29. A computer generated document including a data object generated by a conversion of instruction symbols inputted in the form of text characters, wherein the data object is reconvertible into the instruction symbols.

30. The document of claim 29 wherein the data obejct comprises a mathematical formula or a special character.
